# EUROPÄISCHE PATENTANMELDUNG

(11) **EP 2 626 181 A2**
(43) Veröffentlichungstag der Anmeldung: **14.08.2013**
(21) Anmeldenummer: 12192332.0
(22) Anmeldetag: 13.11.2012
(51) Int. Cl.: B29C 31/08, B25J 15/06

(54) **Transportverfahren zur Ablage von Fasermatten, Transportvorrichtung sowie eine Vorrichtung zum Greifen eines flächigen Halbzeugs**

(30) Priorität: 05.12.2011 DE 102011056029
(71) Anmelder: REHAU AG + Co, 95111 Rehau (DE)
(72) Erfinder: Kind, Franz-Georg, 95176 Konradsreuth (DE); Laukant, Holger, 95032 Hof (DE)

(57) **Zusammenfassung**

Die vorliegende Erfindung bezieht sich auf ein Transportverfahren zur Ablage von Fasermatten (1) auf einen Werkstückträger (2) unter Verwendung einer Transportvorrichtung (3), eine entsprechende Transportvorrichtung sowie eine Vorrichtung (5) zum Greifen von flächigen Halbzeugen.

## Beschreibung

Die vorliegende Erfindung bezieht sich auf ein Transportverfahren zur Ablage von Fasermatten auf einen Werkstückträger unter Verwendung einer Transportvorrichtung, eine entsprechende Transportvorrichtung sowie eine Vorrichtung zum Greifen von flächigen Halbzeugen.

Aus dem Stand der Technik sind Transportverfahren und Transportvorrichtungen zur Ablage von Fasermatten bekannt. Die Schrift US 4,571,320 A offenbart eine Vorrichtung und ein Verfahren, bei welchem ein Fasermaterial in Form eines so genannten SMC (Sheet Molding Composite) über eine an einem Roboter befestigte Transporteinheit transportiert und in ein Werkzeug eingelegt werden kann. Hierbei wird die Fasermatte mittels Sauggreifern, welche starr und unbeweglich auf einem gabelförmigen Traggestell mit der Robotereinheit verbunden sind, aufgenommen und über einen Werkstückträger in Form einer Werkzeughälfte geführt. Die Ablage der Fasermatte erfolgt durch ein Abschalten des Vakuums der Sauggreifer, sodass die Fasermatte auf die vorgenannte Werkzeughälfte herunterfällt. Nachteilig an diesem aus dem Stand der Technik bekannten Transportverfahren ist, dass die Fasermatte nunmehr ungenau positioniert und lediglich bereichsweise auf der Werkzeughälfte aufliegt. Dabei entstehende Lufteinschlüsse können sich in einem nachfolgenden Pressvorgang eines Bauteils negativ auf die späteren Bauteileigenschaften auswirken. Zudem wird durch das einfache Fallenlassen der Fasermatte auf die Werkzeughälfte eine sehr ungenaue Lagetoleranz erzielt, was insbesondere bei Bauteilen aus mehreren Fasermatten, die in einer definierten Position zueinander angeordnet und nacheinander abgelegt werden müssen, ebenfalls negative Auswirkungen auf die Bauteileigenschaften hat.

Die Offenlegungsschrift DE 36 29 968 A1 lehrt zum Transport und zum Ablegen von Fasermatten wie etwa Prepregzuschnitten, die Verwendung eines Aufnehmers, welcher eine Vielzahl von rasterartig auf einem gemeinsamen Träger verteilten Saugrohren mit Saugöffnungen aufweist.

Die einzelnen Saugrohre sind zur Vakuumzuführung, d.h. zur Aktivierung der jeweiligen Saugöffnung individuell ansteuerbar. Die individuelle Ansteuerung der einzelnen Saugrohre erfolgt durch eine elektromagnetisch betätigte Verlagerung der einzelnen Saugrohre aus einem gemeinsamen Vakuumraum heraus, sodass das Vakuum entsprechend über diese Saugrohre an der Fasermatte anliegt und diese erfassen können. Hierbei können die Saugrohre in eine Ruheposition, in welcher die Vakuumzuführung abgetrennt ist, und eine Arbeitsposition, an welcher die Vakuumzuführung anliegt, verschoben werden. In der hervorgetretenen Arbeitsposition sind die Saugrohre bzw. die Saugrohröffnungen in einer flachen Ebene angeordnet. Nachteilig an diesem Stand der Technik ist, dass eine derartige Transportvorrichtung ebenfalls lediglich ein flächiges Ablegen bzw. Fallenlassen einer entsprechenden Fasermatte auf einem Werkzeug bzw. Werkstückträger ermöglicht.

Die Erfindung stellt sich daher die Aufgabe, ein Transportverfahren, eine Transportvorrichtung, sowie eine Vorrichtung zum Greifen eines flächigen Halbzeuges anzugeben, welche eine definierte Ablage und Lagefixierung einer Fasermatte auf einem Werkstückträger ermöglicht.

Die erfindungsgemäße Aufgabe wird gelöst durch ein Transportverfahren mit den Merkmalen des Anspruch 1, einer Transportvorrichtung mit den Merkmalen des Anspruch 12 und einer Vorrichtung mit den Merkmalen des Anspruchs 13.

Das erfindungsgemäße Transportverfahren zur Ablage von Fasermatten lässt sich wie folgt beschreiben:
Transportverfahren zur Ablage von Fasermatten auf einem Werkstückträger unter Verwendung einer Transportvorrichtung, wobei die Transportvorrichtung aufweist:
   - eine räumlich bewegbare Handhabungseinheit,
   - mindestens eine Greifeinheit mit einem Kontaktbereich zum Erfassen der Oberseite der Fasermatte,
   - mindestens eine die Handhabungseinheit und die Greifeinheit verbindende Tragstruktur,
   - mindestens einen an der Tragstruktur angeordneten und mit der Fasermatte in Kontakt bringbaren, eine Kontaktfläche aufweisenden Formungskörper, wobei die Kontaktfläche an die vorzugsweise dreidimensionale Kontur des Werkstückträgers angepasst oder anpassbar ist,
umfassend die folgenden Schritte:
   - Oberseitiges Erfassen einer bereitgestellten Fasermatte in einer Aufnahmeposition mittels des Kontaktbereiches der Greifeinheit,
   - Transport der Fasermatte mittels der Handhabungseinheit zu einer Ablageposition,
   - Annähern der Unterseite der Fasermatte an den Werkstückträger,
   - Verlagern der Kontaktfläche des Formungskörpers in Relation zu dem Werkstückträger,
   - vorzugsweise vollflächiges Anpressen und/oder Lagefixieren der Fasermatte auf den/dem Werkstückträger oder eine auf dem Werkstückträger befindliche weitere Fasermatte mittels des Formungskörpers,
   - Lösen der gesamten Transportvorrichtung von der Fasermatte.

Ein Werkstückträger kann insbesondere ein eine dreidimensionale Kontur vorgebender Werkstückträger oder ein Teil bzw. eine Hälfte eines Press- und/oder Umform- und/oder Spritzgusswerkzeuges sein. Durch das erfindungsgemäße Transportverfahren kann in vorteilhafter Weise die Fasermatte über das Vorsehen eines angepassten bzw. anpassbaren Formungskörpers vorzugsweise vollflächig auf dem Werkstückträger angepresst und/oder dort lagefixiert werden. Im Gegensatz zu Transportverfahren des Standes der Technik wird die Fasermatte somit genau dort angepresst und/oder genau dort lagefixiert, wo die Transportvorrichtung die Fasermatte ablegt. Durch ein vollflächiges Anpressen wird erreicht, dass sich unterhalb der Fasermatte weitestgehend keine Hohlräume oder Lufteinschlüsse mehr befinden bzw. die Fasermatte keine Falten werfen kann. Dies ist insbesondere dann von Vorteil, wenn die Fasermatten übereinander angeordnet werden, d.h. wenn eine Fasermatte zumindest teilweise auf eine weitere Fasermatte abgelegt wird.

Vorzugsweise erfolgt die Verlagerung der Kontaktfläche des Formungskörpers durch eine auf die Kontaktfläche einwirkende Druckkraft. Durch die Einwirkung der Druckkraft erfolgt eine Anpassung des Formungskörpers an die jeweilige Kontur des Werkstückträgers bzw. desjenigen Teils des Werkstückträgers, auf welchem die Fasermatte abgelegt werden soll. Die Druckkraft resultiert hierbei vorzugsweise aus der Gegenkraft, die der Anpresskraft der Handhabungseinheit entgegenwirkt. Alternativ kann auch der Werkstückträger gegenüber der Position der Transportvorrichtung verlagert werden, so dass sich die Kontaktfläche des Formungskörpers in Relation zu dem Werkstückträger verlagert. Die Druckkraft resultiert dann direkt aus der Anpresskraft des Werkstückträgers.

Alternativ oder in Kombination kann die Verlagerung der Kontaktfläche des Formungskörpers durch eine gezielte Kippbewegung und/oder Hubbewegung des Formungskörpers oder von Teilen des Formungskörpers erfolgen. Die gezielte Kipp- und/oder Hubbewegung des Formungskörpers kann beispielsweise pneumatisch und/oder hydraulisch und/oder mittels eines elektromechanischen Antrieb bewerkstelligt werden. Auch piezoelektrische Antriebe sind im Rahmen der Erfindung denkbar.

Das Lösen der Fasermatte kann über ein Anblasen der Oberseite der Fasermatte mit Druckluft über an der Transportvorrichtung vorgesehene Druckluftausströmer unterstützt werden. Vorzugsweise sind die Druckluftausströmer im Bereich des Formungskörpers angeordnet. Weiter vorzugsweise sind die Druckluftausströmer Teil des Formungskörpers oder an dem Formungskörper ausgebildet. Ebenfalls im Rahmen der Erfindung ist, dass die Druckluftausströmer an der Greifeinheit oder den Greifeinheiten angeordnet ist/sind.

Der Formungskörper kann durch mindestens eine zusätzliche Greifeinheit gebildet sein oder werden. Der Kontaktbereich der zusätzlichen Greifeinheit definiert die Kontaktfläche des Formungskörpers. Der Kontaktbereich bzw. die Kontaktfläche kann mittels mindestens einer Kippachse an die dreidimensionale Kontur des Werkstückträgers anpassbar sein. Eine Kippachse kann beispielsweise mittels eines Kugelgelenks, einer Drehachse, eines weichelastischen Bereiches, eines Gelenkes, einer Gelenkwelle, eines Federelements, eines biegeschlaffen Trägers und/oder mittels eines Elastomeren Materials gebildet sein.

Der Formungskörper kann durch eine Mehrzahl von stabförmigen, in Längsrichtung beweglich gelagerten Segmentformungskörpern gebildet sein. Die Endbereiche der Segmentformungsköper definieren gemeinsame die Kontaktfläche des durch die Segmentformungskörper gebildeten Formungskörpers. Der Formungskörper kann vergleichbar eines so genannten Nadelbildes aufgebaut sein, wie dies aus der Schrift US 4,536,980 A für ein derartiges Spielzeug bekannt ist.

Analog zu einer vorgenannten Variante des Transportverfahrens kann die Verlagerung der Kontaktfläche des Formungskörpers hierbei durch eine auf die Kontaktfläche einwirkende Druckkraft erfolgen, was in dieser Variante des Transportverfahrens bedeutet, dass die einzelnen stabförmig, in Längsrichtung beweglich gelagerten Segmentformungskörper in Relation zu der Kontur des Werkstückträgers verlagert werden, und die Endbereiche der jeweiligen Segmentformungskörper die gemeinsame Kontaktfläche definieren. Neben einer druckkraftbedingten Verlagerung der Kontaktfläche der vorgenannten Segmentformungskörper kann diese Verlagerung auch aktiv durch eine gezielte Verlagerung der Segmentformungskörper erreicht werden. Die aktive Verlagerung kann beispielsweise pneumatisch und/oder elektrohydraulisch und/oder über einen elektromechanischen Antrieb bewerkstelligt werden. Auch piezoelektrische Antriebe sind im Rahmen der Erfindung denkbar. Die stabförmig, in Längsrichtung beweglich gelagerten Segmentformungskörper sind vorzugsweise matrixförmig auf oder in der Tragstruktur angeordnet.

Die Segmentformungskörper können einen zur Kontaktfläche offenen Hohlraum aufweisen. Hierdurch verringert sich die tatsächliche Berührungsfläche von Segmentformungskörper und Fasermatte, sodass der bzw. die Segmentformungskörper sich leichter von der Fasermatte lösen lassen. Zudem ermöglicht es ein durchgängiger zur Kontaktfläche offener Hohlraum Druckluft auf die Oberseite der Fasermatte zu leiten, um das Lösen der Segmentformungskörper über ein Anblasen der Oberseite der Fasermatte mit Druckluft zu unterstützen.

Die Fasermatte kann mit der weiteren Fasermatte lokal verbunden, insbesondere verschweißt werden. Befindet sich bereits eine weitere Fasermatte auf dem Werkstückträger, ist es vorteilhaft, die abgelegte Fasermatte mit dieser bereits auf dem Werkstückträger befindlichen weiteren Fasermatte lokal zu verbinden. Hierzu eigenen sich insbesondere Schweißverfahren, wie das Ultraschallschweißverfahren oder das Laserschweißverfahren. Vorzugsweise erfolgt die Lagefixierung der Fasermatten zueinander dabei durch ein Ultraschallschweiß- und/oder Heizelementschweiß- und/oder Laserschweißverfahren. Die Lagefixierung der Fasermatten zueinander kann während oder nach Abschluss des Aufbaus eines aus den Fasermatten gebildeten Vorformlings auf dem Werkstückträger erfolgen. Zur Lagefixierung der Fasermatten zueinander können zudem textiltechnische Verfahren, vorzugsweise Vernadeln und/oder Vernähen eingesetzt werden.

Die Kontaktfläche des Formungskörpers und/oder der Kontaktbereich der Greifeinheit kann in Ultraschallschwingungen versetzbar sein. Da sowohl die Kontaktfläche des Formungskörpers als auch der Kontaktbereich der Greifeinheit auf der Fasermatte aufliegt, kann entsprechend eine Ultraschallenergie übertragen werden und z.B. zum Verschweißen der transportierten Fasermatte mit einer weiteren Fasermatte verwendet werden.

Über oder durch die Greifeinheit und/oder über oder durch den Formungskörper kann eine hochenergetische Strahlung auf die Fasermatte und/oder die weitere Fasermatte übertragen werden. Aufgrund der Tatsache, dass der Formungskörper die Fasermatte auf dem Werkstückträger bzw. auf einer weiteren auf dem Werkstückträger befindlichen Fasermatte anpresst und/oder lagefixiert, kann vor Lösen der Transportvorrichtung durch Übertragen einer hochenergetischen Strahlung auf die Fasermatte und/oder die weitere Fasermatte die Fasermatte und die weitere Fasermatte miteinander verbunden werden. Vorteilhafterweise wird eine hochgenaue Positionierung der beiden Fasermatten zueinander dauerhaft lagefixiert. Zudem ermöglicht das Anpressen der transportierten Fasermatte auf der weiteren Fasermatte einen spaltfreien Überlapp zwischen diesen beiden Fasermatten, sodass eine qualitativ hochwertige Schweißverbindung an diesem Überlapp erzielbar ist.

Vorzugsweise ist die Kontaktfläche des Formungskörpers und/oder der Kontaktbereich der Greifeinheit mit einer Schicht aus einem haftungsvermindernden Material versehen oder überhautet. Um das Lösen der Transportvorrichtung von der Fasermatte zu erleichtern ist es vorteilhaft, die Kontaktfläche des Formungskörpers und/oder den Kontaktbereich der Greifeinheit mit einer Schicht aus einem haftungsvermindernden Material zu versehen oder zu überhauten. Haftungsvermindernde Materialien können auf Basis von Silikonen (z.B. Silikon-Nanofilamentbeschichtungen) oder auf Basis von Fluorverbindungen (z.B. PTFE) gebildet sein.

Weiterhin Teil der Erfindung ist eine Transportvorrichtung zum Transport von Fasermatten mit:
- einer räumlich bewegbaren Handhabungseinheit,
- mindestens einer Greifeinheit zum Erfassen der Oberseite einer Fasermatte, wobei die Greifeinheit an ihrem Ende einen Kontaktbereich zum Erfassen der Fasermatte aufweist,
- mindestens einer Tragstruktur mittels der die Handhabungseinheit mit der Greifeinheit verbunden ist,
   wobei die Transportvorrichtung ferner mindestens einen mit der Fasermatte in Kontakt bringbaren, eine Kontaktfläche aufweisenden Formungskörper umfasst, welcher an der Tragstruktur angeordnet ist, und dessen Kontaktfläche an die dreidimensionale Kontur des Werkstückträgers angepasst oder anpassbar ist, und die Kontaktfläche des Formungskörpers in Relation zu dem Werkstückträger verlagerbar ist, so dass über den Formungskörper die Fasermatte auf dem Werkstückträger und/oder eine auf dem Werkstückträger befindliche weitere Fasermatte vorzugsweise vollflächig anpressbar und/oder dort lagefixierbar ist. Die Vorteile und Varianten einer entsprechenden Transportvorrichtung ergeben sich aus dem vorstehend beschriebenen erfindungsgemäßen Transportverfahren.

Weiterhin Teil der Erfindung ist eine Vorrichtung zum Greifen eines flächigen Halbzeuges, vorzugsweise einer Fasermatte, insbesondere zur Verwendung in einem Transportverfahren nach einem der Ansprüche 1 bis 11 oder in einer Transportvorrichtung gemäß Anspruch 12.

Die Vorrichtung zum Greifen eines flächigen Halbzeuges umfasst eine Greifeinheit, wobei die Greifeinheit eine Saugglocke mit einem umlaufenden Rand aufweist, welche über mindestens eine Druckleitung mittels Anlegen eines Unter- oder eines Überdruckes in einen Ansaugzustand oder einen Abstoßungszustand bringbar ist und, wobei der umlaufende Rand im Ansaugzustand einen Teilbereich des flächigen Halbzeuges einschließt, wobei mindestens eine Einrichtung mit einer Quelle einer hochenergetischen Strahlung vorgesehen ist, wobei diese Einrichtung derart angeordnet ist, dass die Strahlung innerhalb des umlaufenden Randes auf den Teilbereich des flächigen Halbzeuges übertragbar ist. Eine derartige Vorrichtung erlaubt es, zum einen ein flächiges Halbzeug, insbesondere eine Fasermatte anzusaugen und für einen Transport und ein Ablegen zu übernehmen, und gleichzeitig am Ablagepunkt mittels einer Übertragung einer hochenergetischen Strahlung auf den Teilbereich des von dem umlaufenden Rand der Saugglocke eingeschlossenen Teilbereichs des flächigen Halbzeuges eine Schweißverbindung zu einem unterhalb des flächigen Halbzeugs befindlichen Objekt zu ermöglichen. Die Saugglocke ist hierbei vorzugsweise so steif ausgeführt, dass bei Ablage des flächigen Halbzeuges eine gewisse Anpresskraft über die Vorrichtung auf das flächige Halbzeug und das darunter befindliche Objekt übertragbar ist. Das vorgenannte Objekt kann insbesondere ein weiteres flächiges Halbzeug, vorzugsweise eine weitere Fasermatte sein.

Anlegen eines Überdruckes meint im Rahmen der Erfindung im Übrigen auch, dass lediglich der Unterdruck abgeschaltet wird und sich infolgedessen ein Normalluftdruck innerhalb des von der Saugglocke und dem flächigen Halbzeug eingeschlossenen Saugglockenraums einstellt.

Die Einrichtung mit der Quelle der hochenergetischen Strahlung kann einen Laserstrahler und/oder einen Plasmastrahler und/oder einen Elektronenstrahler umfassen. Die hochenergetische Strahlung kann daher ein Laserstrahl oder ein Elektronenstrahl oder ein Plasmastrahl sein. Die Einrichtung kann hierbei in unmittelbarer Nähe der Saugglocke bzw. der Greifeinheit angeordnet sein, kann jedoch auch mittels mindestens eines Strahlungsleiters der Einrichtung zu der Saugglocke geführt sein.

Vorzugsweise ist die hochenergetische Strahlung über oder durch die Druckleitung oder mittels der Druckleitung übertragbar. In der Regel handelt es sich bei der Druckleitung um einen länglichen Hohlraum, über oder durch welchen beispielsweise ein Laserstrahl in einfacher Weise auf den Teilbereich des flächigen Halbzeuges übertragbar ist. Weiterhin denkbar ist die Ausbildung einer so genannten Koaxialleitung, in welcher innenliegend eine Glasfaserleitung zur Übertragung eines Laserstrahles angeordnet ist. Mittels der die Glasfaserleitung umgebenden Druckleitung kann das Anlegen eines Unter- oder eines Überdruckes ermöglicht sein.

Die Faserverstärkung der vorgenannten Fasermatte kann bereichsweise oder vollständig aus Endlosfasern bestehen, welche unidirektional ausgerichtet oder als Gewebe ausgebildet sein können. Die vorgenannte Fasermatte kann eine Matrix aus einem thermoplastischen Kunststoffmaterial oder aus einem duroplastischen Kunststoffmaterial umfassen. Die Faserverstärkung der Fasermatte kann durch Glasfasern, Karbonfasern, Aramidfasern, Basaltfasern, Mineralfasern, Fasern aus nachwachsenden Rohstoffen, Metallfasern und/oder durch Polymerfasern gebildet sein. Das thermoplastische Kunststoffmaterial kann Polyamid (PA), insbesondere Polyamid 6 und Polyamid 6.6, Polypropylen (PP), Polyethylen (PE), POM (Polyoxymethylen), Polyphenylensulfid (PPS), Polyethersulfon (PES), Polyetheretherketon (PEEK), Polyetherimid (PEI), Polyethylenterephthalat (PET), vergleichbare Technische- oder Hochtemperatur-Kunststoffmaterialien oder Kombinationen der vorgenannten Kunststoffmaterialien umfassen. Ein duroplastisches Kunststoffmaterial kann Aminoplaste, Phenoplaste, Epoxidharze, vernetzte Polyacrylate, Polyurethane und weitere vernetzbare Polymere umfassen. Bei der Verwendung einer Fasermatte mit einer Matrix aus einem thermoplastischen Kunststoffmaterial kann die Fasermatte oder können die Fasermatten bis an oder über die Erweichungstemperatur oder bis an oder über die Schmelztemperatur der thermoplastischen Matrix erwärmt werden, um das Verformungsvermögen der Fasermatte bzw. der Fasermatten zu erhöhen. Die Erwärmung kann beispielsweise durch Infrarotstrahlung, Mikrowellenstrahlung, ein Plasma, Induktion oder in einem Konvektions-Ofen erfolgen. Entsprechende Erwärmungsvorrichtungen können insbesondere in der Transportvorrichtung integriert oder mit dieser verbunden sein.

Die Kontaktfläche des Formungskörpers und/oder der Kontaktbereich der Greifeinheit kann/können einen Drucksensor aufweisen oder kann/können mit einem Drucksensor verbunden sein. Die Auswertungssignale eines entsprechenden Drucksensors können zur Steuerung und/oder Regelung der Transportvorrichtung genutzt werden. Die Sensorsignale eines entsprechenden Drucksensors können zur Steuerung und/oder Regelung der Transportvorrichtung genutzt werden.

Im Bereich der Saugglocke kann ein mit der Einrichtung in Signalverbindung stehender Drucksensor vorgesehen sein, dessen Sensorsignal zur Freigabe der hochenergetischen Strahlung nutzbar ist. Mittels des Drucksensors kann das Aufliegen des umlaufenden Randes der Saugglocke detektiert werden und die hochenergetische Strahlung erst dann freigegeben werden, wenn sichergestellt ist, dass dieses Aufliegen tatsächlich vorliegt. Die entsprechende Verarbeitung des Sensorsignals erfolgt über eine dem Fachmann bekannte Regel- und/oder Steuereinheit. Der Drucksensor kann hierbei den Druck innerhalb des Saugglockenraums (entspricht dem von der Saugglocke und dem flächigen Halbzeug eingeschlossene Raum) und/oder eine Druckkraft auf die Saugglocke ermitteln. Im Falle einer Druckermittlung im Saugglockenraum ermöglicht ein ermittelter und vorab definierter Mindestdruckwert unterhalb des Atmosphärendrucks die Bestimmung, dass die Saugglocke sich fest auf dem flächigen Halbzeug befindet. Entsprechendes gilt für eine vorab definierte Druckkraft.

Im Folgenden wird die Erfindung an lediglich Ausführungsbeispiele darstellender Zeichnungen der Erfindung näher erläutert.

Es zeigen schematisch:
- Fig. 1: einen Ablauf des erfindungsgemäßen Verfahrens, sowie eine erfindungsgemäßen Transportvorrichtung,
- Fig. 2.: eine Querschnittsdarstellung einer Ausführungsform einer erfindungsgemäßen Transportvorrichtung,
- Fig. 3: eine Querschnittsdarstellung und eine Draufsicht einer weiteren erfindungsgemäßen Transportvorrichtung,
- Fig. 4: eine Querschnittsdarstellung einer weiteren erfindungsgemäßen Transportvorrichtung,
- Fig. 5: eine Querschnittsdarstellung und eine Draufsicht einer weiteren erfindungsgemäßen Transportvorrichtung,
- Fig. 6: eine Querschnittsdarstellung einer weiteren erfindungsgemäßen Transportvorrichtung,
- Fig. 7: eine Querschnittsdarstellung einer weiteren erfindungsgemäßen Transportvorrichtung,
- Fig. 8: eine Querschnittsdarstellung einer erfindungsgemäßen Vorrichtung zum Greifen eines flächigen Halbzeuges,
- Fig. 9: eine Querschnittsdarstellung einer weiteren erfindungsgemäßen Vorrichtung zum Greifen eines flächigen Halbzeuges.

In den Figuren werden gleiche oder funktionsgleiche Elemente mit den gleichen Bezugszeichen versehen.

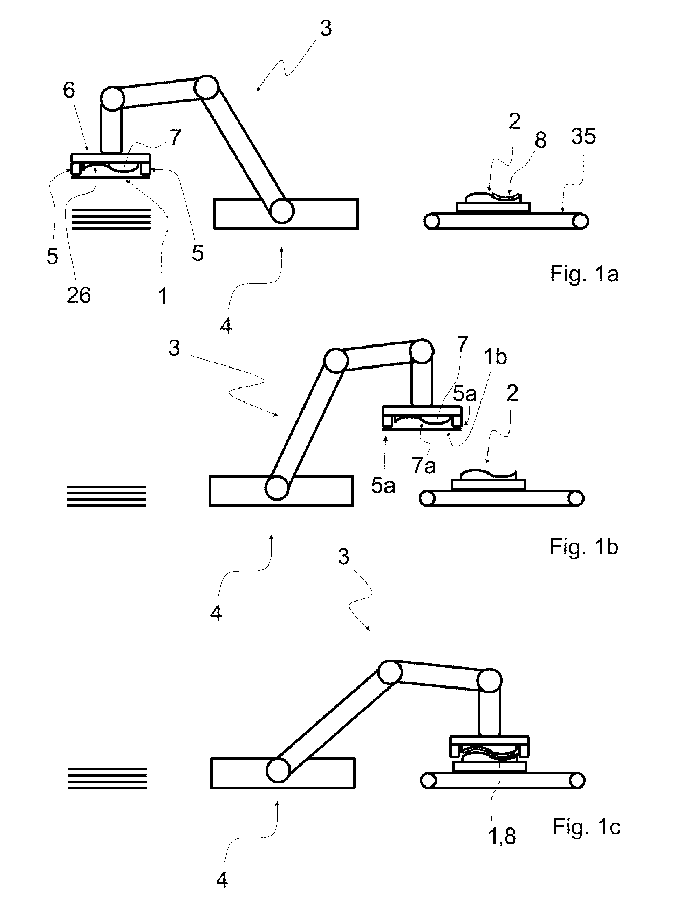

Die Figuren 1a bis 1c zeigen schematisch den Ablauf des erfindungsgemäßen Transportverfahrens. Dargestellt ist eine Transportvorrichtung 3 mit einer räumlich bewegbaren Handhabungseinheit 4 in Form eines Mehrachsen-Robotersystems 3, mehreren Greifeinheiten 5 zum Erfassen der Oberseite 1a einer Fasermatte 1, wobei die Greifeinheiten 5 an ihrem Ende einen Kontaktbereich 5a zum Erfassen der Fasermatte 1 aufweisen, und einer Tragstruktur 6 mittels der die Handhabungseinheit 4 mit der Greifeinheit 5 verbunden ist. Die Transportvorrichtung 3 umfasst ferner einen mit der Fasermatte 1 in Kontakt bringbaren, eine Kontaktfläche 7a aufweisenden Formungskörper 7, welcher an der Tragstruktur 6 angeordnet ist, und dessen Kontaktfläche 7a an die dreidimensionale Kontur des Werkstückträgers 2 angepasst oder anpassbar ist.

Die Kontaktfläche 7a des Formungskörpers 7 ist in Relation zu dem Werkstückträger 2 verlagerbar, so dass über den Formungskörper 7 die Fasermatte 1 auf dem Werkstückträger 2 und/oder eine auf dem Werkstückträger 2 befindliche weitere Fasermatte 8 vorzugsweise vollflächig anpressbar und/oder dort lagefixierbar ist. Das Transportverfahren zur Ablage von Fasermatten 1 auf einen Werkstückträger 2 unter der Verwendung einer vorgenannte beschriebenen Transportvorrichtung 3 umfasst die im folgenden dargelegten Schritte. Wie in Fig. 1 a ersichtlich, erfolgt zunächst ein oberseitiges Erfassen einer bereitgestellten Fasermatte 1 in einer Aufnahmeposition mittels des Kontaktbereiches 5a der Greifeinheiten 5. Anschließend erfolgt ein Transport der Fasermatte 1 mittels der Handhabungseinheit 4 (vgl. Fig. 1 b) zu einer Ablageposition oberhalb des Werkstückträgers 2. Der Werkstückträger 2 befindet sich auf einem Transportband 35 und kann nach erfolgter Ablage aller Fasermatten 1 auf dem Werkstückträger 2 von der Transportvorrichtung 3 entfernt und durch einen neuen Werkstückträger 2 ersetzt werden. Der Werkstückträger 2 dient zum Aufbau eines dreidimensionalen Vorformlings aus Fasermatten 1, wobei der Werkstückträger 2 die Grobkontur des Vorformlings vorgibt. In einem weiteren Schritt erfolgt das Annähern der Unterseite 1 b der Fasermatte 1 an den Werkstückträger 2 und anschließend das Verlagern der Kontaktfläche 7a des Formungskörpers 7 in Relation zu dem Werkstückträger 2 (vgl. Fig. 1c). Hierdurch wird ein vollflächiges Anpressen und Lagefixieren der Fasermatte 1 auf dem Werkstückträger 2 und auf der weiteren Fasermatte 8 mittels des Formungskörpers 7 erreicht. Das nachfolgende Lösen der gesamten Transportvorrichtung 3 von der Fasermatte ist hier nicht näher dargestellt. Das Lösen kann über ein Anblasen der Oberseite 1a der Fasermatte 1 mit Druckluft über an der Transportvorrichtung 3 vorgesehene Druckluftausströmer unterstützt werden. Die Verlagerung der Kontaktfläche 7a des Formungskörpers 7 erfolgt in diesem Ausführungsbeispiel durch eine gezielte Hubbewegung des Formungskörpers 7 welcher mittels der Handhabungseinheit 4 in Richtung des Werkstückträgers 2 verlagert wird. Die Kontaktfläche 7a des Formungskörpers 7 und der Kontaktbereich 5a der Greifeinheiten 5 sind mit einer Schicht 26 aus einem haftungsvermindernden Material versehen bzw. überhautet. Als haftungsverminderndes Material hat sich hierbei insbesondere ein Material auf Basis von Polytetrafluorethylen (PTFE) als vorteilhaft erwiesen.

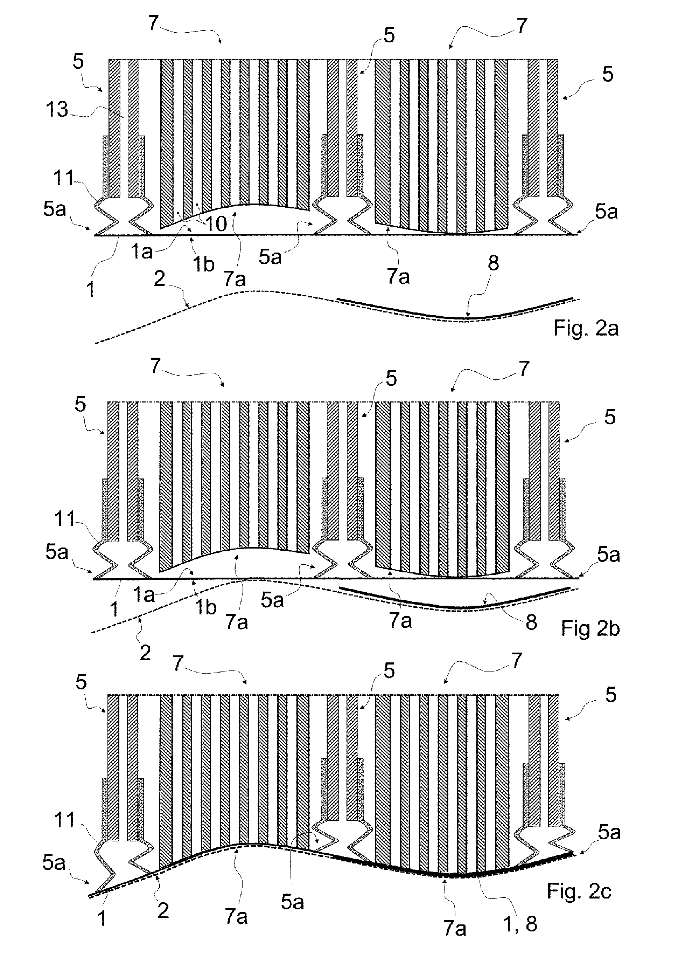

Die Fig. 2 zeigt in den Figuren 2a bis 2c eine mögliche zeitliche Reihenfolge eines erfindungsgemäßen Transportverfahrens, wobei hier die Schritte des oberseitigen Erfassens einer bereitgestellten Fasermatte 1 in einer Aufnahmeposition mittels des Kontaktbereichs 5a einer Greifeinheit 5 sowie der Transport der Fasermatte 1 mittels der Handhabungseinheit 4 zu einer Ablageposition nicht näher dargestellt sind. Die Fig. 2a zeigt einen Teilbereich der Transportvorrichtung 3. Dargestellt ist eine Schnittdarstellung der unteren Bereiche der Greifeinheiten 5, welche hier nicht näher dargestellt mit einer Tragstruktur 6 verbunden sind, sowie ebenfalls auf dieser nicht näher dargestellten Tragstruktur 6 angeordneten und mit der Fasermatte 1 in Kontakt bringbare, eine Kontaktfläche 7a aufweisenden Formungskörper 7, die ebenfalls nur im unteren Bereich dargestellt sind. Die Kontaktfläche 7a der Formungskörper 7 sind an die dreidimensionale Kontur des Werkstückträgers 2 angepasst. Wie hier in der Schnittdarstellung dargelegt, ist diese dreidimensionale Kontur des Werkstückträgers 2 wellenförmig ausgebildet, wobei sich diese Wellenform auch in die Bildebene bzw. aus der Bildebene heraus erstreckt. In Fig. 2a ist das Annähern der Unterseite 1 b der Fasermatte 1 an den Werkstückträger 2 dargestellt, wobei in Fig. 2b die Fasermatte 1 mit ihrer Unterseite 1 b zunächst an einzelnen Punkten bzw. einer Linie auf dem Werkstückträger 2 aufliegt. Wie in Fig. 2c ersichtlich, erfolgt nunmehr ein Verlagern der Kontaktfläche 7a des Formungskörpers 7 in Relation zu dem Werkstückträger 2, und hiermit verbunden ein vollflächiges Anpressen und Lagefixieren der Fasermatte 1 auf dem Werkstückträger 2, sowie ein vollflächiges Anpressen und Lagefixieren der Fasermatte 1 auf einer auf dem Werkstückträger 2 befindlichen weiteren Fasermatte 8 mittels des Formungskörpers 7. Die Greifeinheiten 5 werden ebenfalls in Relation zu dem Werkstückträger 2 verlagert, in diesem Fall sowohl in Richtung des Werkstückträger 2 als auch von dem Werkstückträger 2 entfernend. Nicht näher dargestellt ist das Lösen der gesamten Transportvorrichtung 3 von der Fasermatte 1. Das Lösen kann hierbei über ein Anblasen der Oberseite 1a der Fasermatte 1 mit Druckluft über an der Transportvorrichtung 3 vorgesehene Druckluftausströmer 10 unterstützt werden. Diese Druckluftausströmer 10 sind hierbei durch Bohrungen innerhalb des Formungskörpers 7 realisiert. Gleichsam können die Druckleitungen 13 der als Sauggreifer 5 ausgebildeten Greifeinheiten 5 dazu genutzt werden, anstelle eines für das Ansaugen notwendigen Unterdruckes einen Überdruck bereitzustellen, welcher ebenfalls zu einem Lösen der Greifeinheiten 5 von der Fasermatte 1 beiträgt. Die Sauggreifer 5 weisen eine Saugglocke 11 in Form eines elastisch verformbaren und zusammenfaltbaren Balges auf.

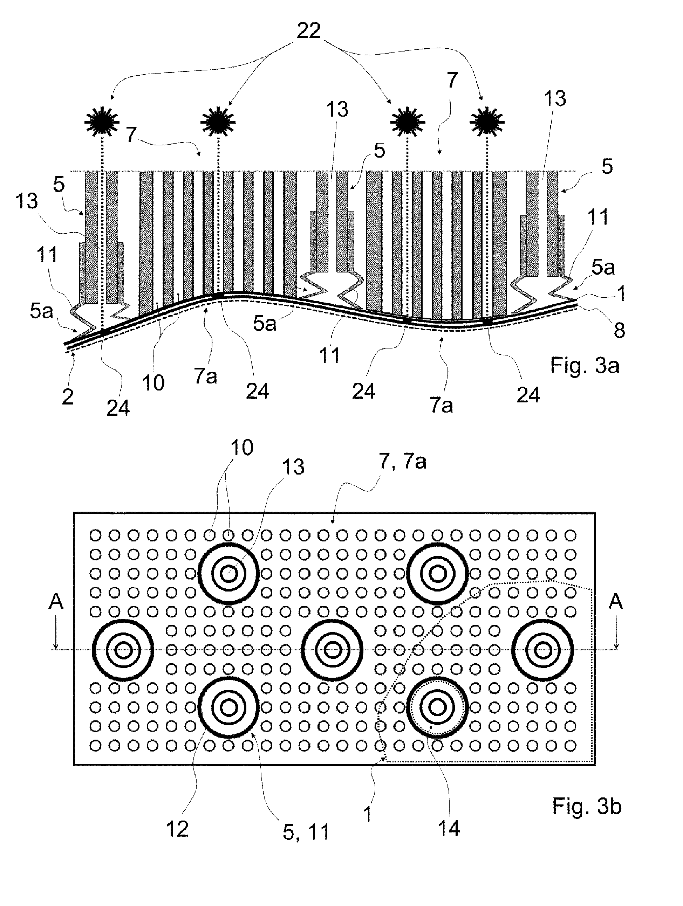

In der Fig. 3a ist eine Schnittdarstellung eines Teilbereichs einer erfindungsgemäßen Transportvorrichtung 3 dargestellt. Die Lage des entsprechenden Schnittes ist in Fig. 3b einer Draufsicht eines entsprechenden Teilbereichs einer Transportvorrichtung 3 zu entnehmen. In Fig. 3a ist ein Teilbereich einer Transportvorrichtung dargestellt, wie diese in den Figuren 2a bis 2c und der entsprechenden Figurenbeschreibung bereits erläutert ist. Ergänzend ist in einem mit dieser Transportvorrichtung 3 durchgeführten erfindungsgemäßen Transportverfahren vorgesehen, dass über oder durch eine der Greifeinheiten 5 und über oder durch den Formungskörper 7 jeweils hochenergetische Strahlung 22 auf die Fasermatte 1 und eine weitere Fasermatte 8 übertragbar ist. Aufgrund der Tatsache, dass der Formungskörper 7 sowie die Greifeinheit 5 die Fasermatte 1 auf dem Werkstückträger 2 und die auf dem Werkstückträger 2 befindliche weitere Fasermatte 8 vollflächig anpressen und dort lagefixieren, kann in vorteilhafter Weise die Fasermatte 1 mit der weiteren Fasermatte 8 lokal verbunden, insbesondere verschweißt werden. Besonders vorteilhaft ist hierbei die Einbringung einer hochenergetischen Strahlung 22 in Form einer Laserstrahlung, wie diese beispielsweise von einer Einrichtung wie einem Faserlaser oder einem Neodym-YAG-Laser bereitgestellt werden kann. Wie bereits vorstehend erläutert, befinden sich innerhalb des Formungskörpers 7 mehrere Bohrungen, welche als Druckluftausströmer 10 verwendet werden, um das Lösen der gesamten Transportvorrichtung 3 von der Fasermatte 1 zu unterstützen. Über selbige Bohrungen ist es in vorteilhafter Weise möglich, die hochenergetische Strahlung 22 auf die Fasermatte 1 und die weitere Fasermatte 8 zu übertragen. Desgleichen ermöglicht der Einsatz einer erfindungsgemäßen Vorrichtung zum Greifen eines flächigen Halbzeuges mit einer Greifeinheit 5, wobei die Greifeinheit 5 eine Saugglocke 11 mit einem umlaufenden Rand 12 (vgl. Fig. 3b) aufweist, welcher über eine Druckleitung 13 mittels Anlegen eines Unter- oder eines Überdrucks in einen Ansaugzustand oder einen Abstoßungszustand bringbar ist und wobei der umlaufende Rand 12 im Ansaugzustand einen Teilbereich 14 (dargestellt in Fig. 3b) des flächigen Halbzeuges 1 (gestrichelt angedeutet in Fig. 3b) einschließt ein zeit- und kostensparende Zusammenfassung von Verfahrensschritten möglich. Eine derartige Transportvorrichtung 3 bzw. Greifeinheit ist zudem vergleichweise kompakt herstellbar. Bei der erfindungsgemäßen Vorrichtung zum Greifen eines flächigen Halbzeuges 1 ist eine Einrichtung mit einer Quelle einer hochenergetischen Strahlung 22 vorgesehen, wobei diese Einrichtung derart angeordnet ist, dass die Strahlung 22 innerhalb des umlaufenden Randes 12 auf den Teilbereich 14 des flächigen Halbzeuges 1 übertragbar ist.

Durch das lokale Verbinden der Fasermatte 1 mit der weiteren Fasermatte 8 durch lokales Verschweißen wird vorteilhaft zum einen erreicht, dass das durch das erfindungsgemäße Transportverfahren erreichte Anpressen und Lagefixieren der Fasermatte 1 auf dem Werkstückträger 2 oder eine auf dem Werkstückträger 2 befindliche weitere Fasermatte 8 mittels des Formungskörpers 7 dauerhaft fixiert wird und durch die dauerhafte Fixierung zudem das Lösen der gesamten Transportvorrichtung 3 von der Fasermatte 1 weiter erleichtert wird, da die abgelegte Fasermatte 1 einen Verbund zu der bereits abgelegten weiteren Fasermatte 8 aufweist. Die Fasermatte 1 kann insbesondere eine Fasermatte 1 mit einer thermoplastischen Matrix sein, vorzugsweise eine unidirektional faserverstärkte Fasermatte 1 mit einer thermoplastischen Matrix. Als Matrixwerkstoff der Fasermatten 1 und 8 dienen insbesondere thermoplastische Werkstoffe umfassend Polyamid (PA), insbesondere Polyamid 6 und Polyamid 6.6, Polypropylen (PP), Polyethylen (PE), POM (Polyoxymethylen), Polyphenylensulfid (PPS), Polyethersulfon (PES), Polyetheretherketon (PEEK), Polyetherimid (PEI), Polyethylenterephthalat (PET), vergleichbare Technische- oder Hochtemperatur-Kunststoffmaterialien oder Kombinationen der vorgenannten Kunststoffmaterialien. Bei Einsatz von Fasermatten mit einer duroplastischen Matrix bewirkt die vorstehend erläuterte Übertragung einer hochenergetischen Strahlung 22 auf die Fasermatte 1 und / oder die weitere Fasermatte 8, dass die duroplastische Matrix ebenfalls lokal vernetzt und eine Fixierung zwischen den Fasermatten 1 und 8 realisiert werden kann. Die Faserverstärkung der Fasermatten 1 und 8 wird vorzugsweise durch Mineralfasern, insbesondere Glasfasern, und/oder durch Carbonfasern, und/oder durch Aramidfasern und/oder durch polymere Fasern, und/oder durch synthetische Fasern und/oder aus Fasern von nachwachsenden Rohstoffen gebildet. Bei einer thermoplastischen Matrix wird eine Fixierung zwischen den Fasermatten 1 und 8 durch das lokale Aufschmelzen der thermoplastischen Matrix der Fasermatte 1 und der weiteren Fasermatte 8 erzielt, welche sich in Folge stoffschlüssig miteinander verbinden. Durch die Übertragung der hochenergetischen Strahlung 22 durch die Bohrungen des Formungskörpers 7 und die Druckleitung 13 der Greifeinheit 5 kann zudem die lokale Fügezone 24 gleichzeitig mit dem Anblasen der Oberseite 1 a der Fasermatte 1 mit Druckluft über selbige vorgenannte Bohrungen bzw. Druckluftausströmer 10, sowie die Druckleitung 13 unmittelbar gekühlt werden, um in kürzerer Zeit in den Erstarrungszustand zu gelangen.

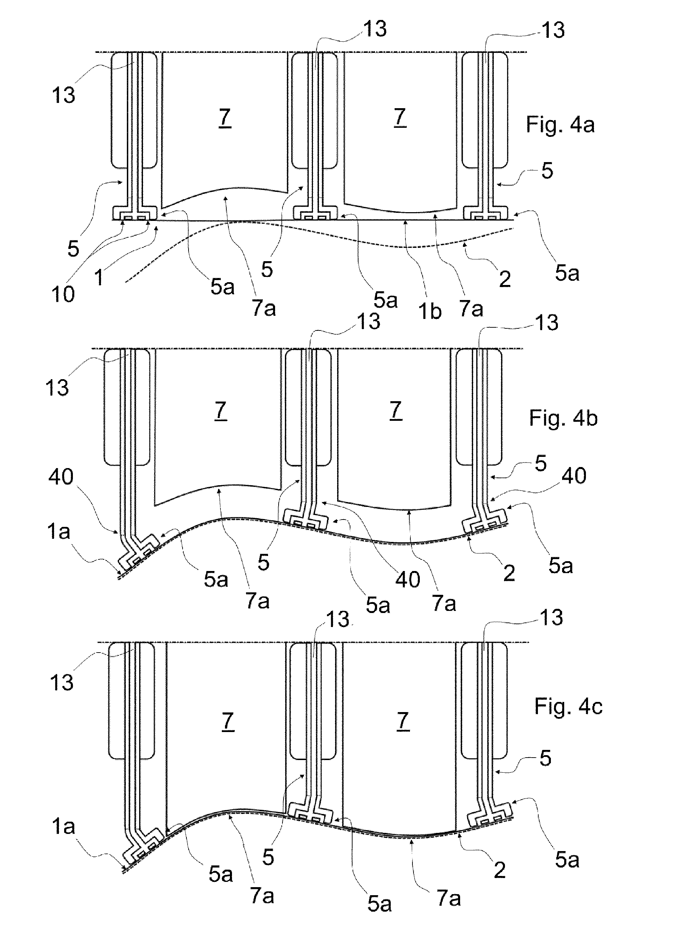

Die Fig. 4 zeigt in den Figuren 4a bis 4c eine mögliche zeitliche Reihenfolge eines erfindungsgemäßen Transportverfahrens, wobei hier die Schritte des oberseitigen Erfassens einer bereitgestellten Fasermatte 1 in eine Aufnahmeposition mittels des Kontaktbereiches 5a mehrerer Greifeinheiten 5, sowie der Transport der Fasermatte 1 mittels der Handhabungseinheit 4 zu einer Ablageposition nicht näher dargestellt sind. Die Fig. 4a zeigt einen Teilbereich der Transportvorrichtung 3. Dargestellt ist eine Schnittdarstellung der unteren Bereiche der Greifeinheiten 5, welche mit einer hier nicht näher dargestellt Tragstruktur 6 verbunden sind, sowie ebenfalls auf dieser nicht näher dargestellten Tragstruktur 6 angeordneten und mit der Fasermatte 1 in Kontakt bringbare Kontaktfläche 7a aufweisende Formungskörper 7, die ebenfalls nur im unteren Bereich dargestellt sind. Die Kontaktfläche 7a der Formungskörper 7 sind an die dreidimensionale Kontur eines Werkstückträgers 2 angepasst. Wie hier in der Schnittdarstellung dargestellt ist, ist diese dreidimensionale Kontur des Werkstückträgers 2 wellenförmig ausgebildet, wobei sich diese Wellenform auch in die Bildebene bzw. aus der Bildebene heraus erstreckt. In der Fig. 4a ist das Annähern der Unterseite 1 b der Fasermatte 1 an den Werkstückträger 2 dargestellt, wobei die Fasermatte 1 mit ihrer Unterseite 1 b zunächst an einzelnen Punkten bzw. einer Linie auf dem Werkstückträger 2 aufliegt. Wie in Fig. 4b ersichtlich, erfolgt nunmehr ein Verlagern der Kontaktbereiche 5a der Greifeinheiten 5 in Relation zu dem Werkstückträger 2. Hierbei werden die Kontaktbereiche 5a in Richtung auf den Werkstückträger 2 hin bewegt, wobei diese Bewegung pneumatisch und / oder elektrohydraulisch erfolgen kann. Die Kontaktbereiche 5a der Greifeinheiten sind über eine Kippachse an die dreidimensionale Kontur des Werkstückträgers 2 anpassbar. Die Fig. 4c zeigt das anschließende Verlagern der Kontaktfläche 7a der Formungskörper 7 in Relation zu dem Werkstückträger 2 und hiermit verbunden ein vollflächiges Anpressen und Lagefixieren der Fasermatte 1 auf den Werkstückträger 2. Nicht näher dargestellt ist das Lösen der gesamten Transportvorrichtung von der Fasermatte 1. Das Lösen kann hierbei über ein Anblasen der Oberseite 1 a der Fasermatte 1 mit Druckluft über an der Transportvorrichtung 3 vorgesehene Druckluftausströmer 10 unterstützt werden. Diese Druckluftausströmer 10 sind hierbei in die Greifeinheiten 5 integriert, welche als Sauggreifer ausgebildet sind. Durch ein Umschalten des zum Erfassen der Oberseite der Fasermatte 1 notwendigen Unterdrucks in einen die Druckluft bereitstellenden Überdruck kann das Lösen der Greifeinheiten unterstützt werden. Vor dem Lösen der Greifeinheiten 5 von der Oberseite 1a der Fasermatte 1 werden jedoch zunächst die Kontaktflächen 7a der Formungskörper 7 von der Fasermatte 1 gelöst.

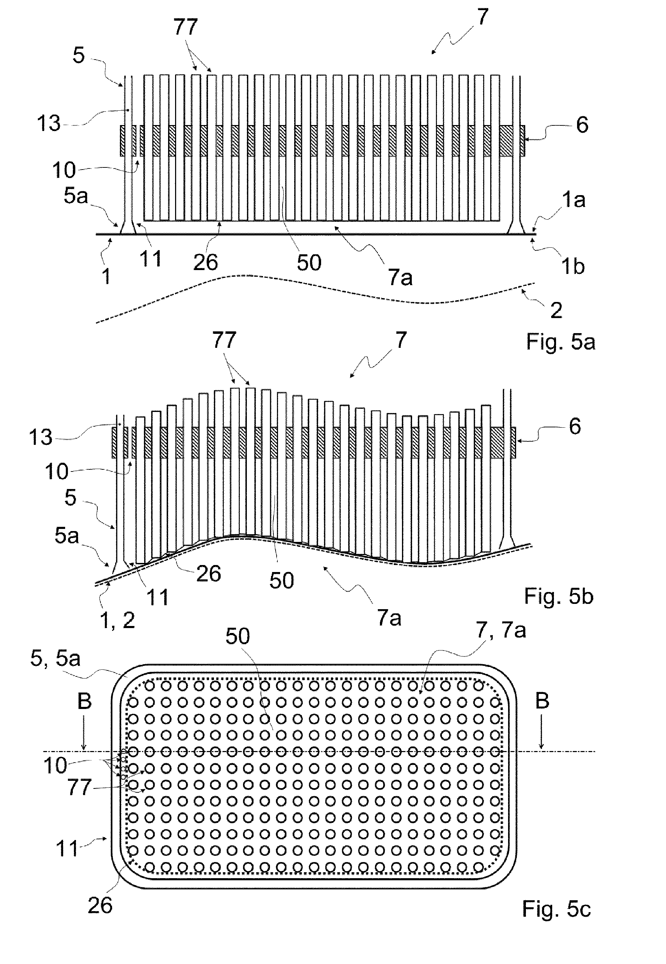

Die Figuren 5a bis 5c zeigen einen Teil einer erfindungsgemäßen Transportvorrichtung 3 mit einem Formungskörper 7, welcher durch eine Mehrzahl von stabförmig, in Längsrichtung beweglich gelagerten Segmentformungskörpern 77 gebildet ist. Die Segmentformungskörper 77 sind hier aus Gründen der Übersichtlichkeit nicht alle einzeln mit dem entsprechenden Bezugszeichen versehen. Die Endbereiche der Segmentformungskörper 77 definieren gemeinsam die Kontaktfläche 7a des Formungskörpers 7. Zum oberseitigen Erfassen einer bereitgestellten Fasermatte 1 in eine Aufnahmeposition mittels des Kontaktbereichs 5a eines über eine Tragstruktur 6 mit der Transportvorrichtung 3 und einer Handhabungseinheit 4 (hier nicht näher dargestellt) verbundenen Greifeinheit 5 ist die Kontaktfläche 7a zunächst im Wesentlichen eben ausgebildet. Die Kontaktfläche 7a des Formungskörpers 7 ist mit einer Schicht 26 aus einem haftungsvermindernden Material überhautet. Die Greifeinheit 5 ist als eine den Formungskörper 7 vollständig umrahmende doppelwandige Saugglocke ausgebildet (vgl. Draufsicht in Fig. 5c). Demgemäß erfolgt das oberseitige Erfassen einer bereitgestellten Fasermatte 1 durch Anlegen eines Unterdruckes an der Druckleitung 13 der Greifeinheit 5. Nach dem Annähern der Unterseite 1 b der Fasermatte 1 an den Werkstückträger 2 erfolgt das Verlagern der Kontaktfläche 7a des Formungskörpers 7 in Relation zu dem Werkstückträger 2 durch eine auf die Kontaktfläche 7a einwirkende Druckkraft. Selbige Druckkraft wird dadurch erzeugt, dass die hier nicht näher dargestellte Handhabungseinheit 4 über die Tragstruktur 6 den Formungskörper 7 auf die Oberfläche des Werkstückträgers 2 drückt, so dass sich in Folge die Kontaktfläche 7a an die dreidimensionale Kontur des Werkstückträgers 2 anpasst. Die Segmentformungskörper 77 üben hierbei mittels Druckfedern eine Gegenkraft aus, so dass die Fasermatte 1 auf den Werkstückträger 2 vollflächig angepresst und dort lagefixiert wird. Alternativ kann die Verlagerung der Kontaktfläche 7a des Formungskörpers 7, also die Verlagerung der Segmentformungskörper 77 durch eine gezielte Hubbewegung der Segmentformungskörper 77 erfolgen. Die Anpassung der Kontaktfläche 7a an die dreidimensionale Kontur des Werkstückträgers 2 kann somit zumindest teilweise bereits vor Ablage bzw. vor Annähern der Fasermatte 1 an dem Werkstückträger 2 angepasst werden, um eine Faltenbildung auf der Fasermatte 1 weiter zu minimieren. Hierzu kann ferner der Druck innerhalb des von der Fasermatte 1, der Transportvorrichtung 3 und der umlaufenden Saugglocke 11 eingeschlossenen Bereiches 50 reduziert werden, so dass sich die Fasermatte1 an den Formungskörper 7 anlegt.

Das Lösen der Transportvorrichtung 3 von der Fasermatte 1 wird über ein Anblasen der Oberseite 1 a der Fasermatte 1 mit Druckluft über einen ebenfalls innerhalb der doppelwandigen Saugglocke 11 der Greifeinheit 5 austretenden Druckluftausströmer 10 unterstützt. Zu diesem Zweck wird der Unterdruck der Greifeinheit 5 weiterhin aufrechterhalten, so dass der innerhalb des von der Fasermatte 1, der Transportvorrichtung 3 und der umlaufenden Saugglocke 11 eingeschlossenen Bereich 50 entstehende Überdruck ein Lösen der Kontaktfläche 7a des Formungskörpers 7 von der Oberseite 1a der Fasermatte 1 unterstützt. Nach entsprechender Registrierung (z.B. mittels eines Weg- oder Drucksensors) des Lösens selbiger Kontaktfläche 7a von der Fasermatte 1 kann ebenfalls der Unterdruck, welcher innerhalb der Saugglocke 11 anliegt, abgeschaltet bzw. in einen Überdruck geändert werden, so dass sich auch die Greifeinheit 5 von der Fasermatte 1 löst.

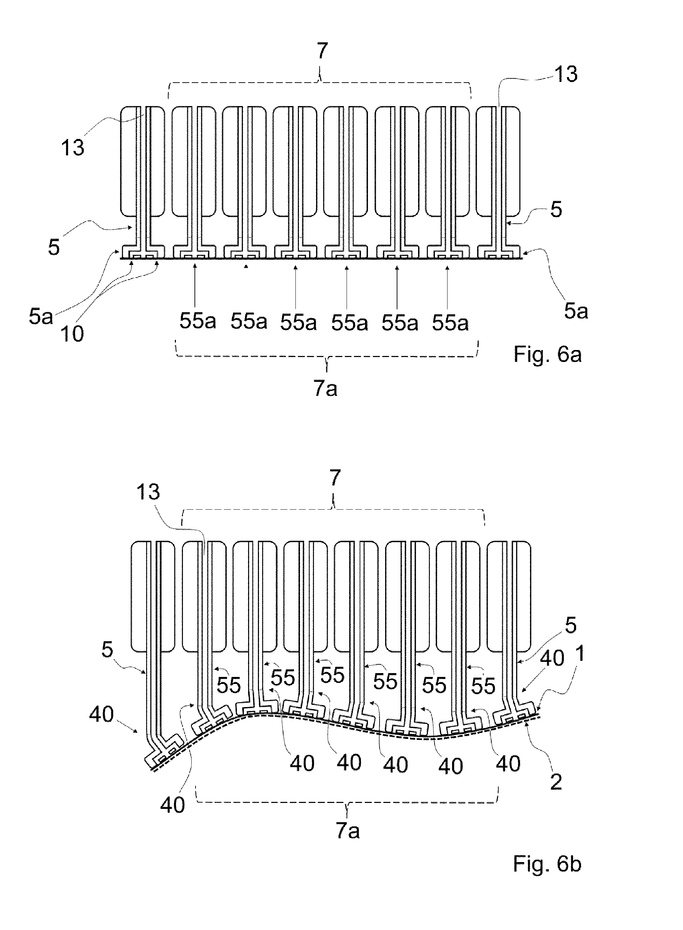

Die Figuren 6a und 6b zeigen eine Schnittdarstellung eines Teilbereiches einer weiteren erfindungsgemäßen Transportvorrichtung. Hierbei ist der Formungskörper 7 durch zusätzliche Greifeinheiten 55 gebildet, wobei die Kontaktbereiche 55a der zusätzlichen Greifeinheiten 55 die Kontaktfläche 7a definieren und mittels Kippachsen 40 an die dreidimensionale Kontur des Werkstückträgers 2 anpassbar sind. Sowohl die Greifeinheiten 5 als auch die zusätzlichen Greifeinheiten 55 erfassen zunächst oberseitig eine bereitgestellte Fasermatte 1 in einer Aufnahmeposition mittels des Kontaktbereiches 5a der Greifeinheiten 5 sowie der Kontaktbereiche 55a der zusätzlichen Greifeinheiten 55. Der Transport der Fasermatte 1 mittels der Handhabungseinheit 4 zu einer Ablageposition sowie das Annähern der Unterseite 1 b der Fasermatte 1 an den Werkstückträger 2 erfolgt analog zu dem bereits in Fig. 1 beschriebenen Transportverfahren. Die Verlagerung der Kontaktfläche 7a des Formungskörpers 7 erfolgt durch eine auf die Kontaktfläche 7a einwirkende Druckkraft. Diese Druckkraft resultiert aus der hydraulischen oder elektromechanischen Verlagerung der Greifeinheiten 5 und der zusätzlichen Greifeinheiten 55 in Richtung hin zu dem Werkstückträger 2. Das hier nicht näher dargestellte Lösen der gesamten Transportvorrichtung 3 von der Fasermatte 1 wird über ein Anblasen der Oberseite 1 a der Fasermatte 1 mit Druckluft über an der Greifeinheit 5 bzw. den zusätzlichen Greifeinheiten 55 vorgesehenen Druckluftausströmern 10 unterstützt. Die Druckluftversorgung der Druckluftausströmer 10 erfolgt hierbei über ein Umschalten der als Sauggreifer ausgebildeten Greifeinheiten 5, 55 von einem anliegenden Unterdruck in einen die Druckluft bereitstellenden Überdruck.

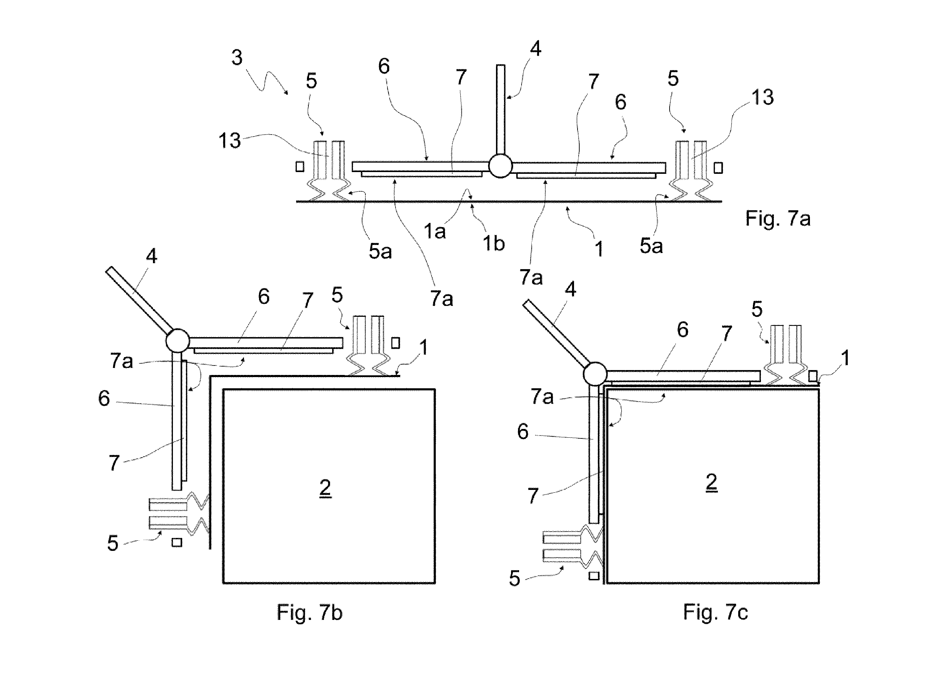

Die Figuren 7a bis 7c zeigen schematisch einen Teilbereich einer erfindungsgemäßen Transportvorrichtung. Die Greifeinheiten 5 sind als Sauggreifer ausgebildet und über eine Tragstruktur 6 mit einer Handhabungseinheit 4 verbunden. Ebenfalls an der Tragstruktur 6 angeordnet sind Formungskörper 7, welche jeweils eine Kontaktfläche 7a aufweisen. Die Anpassung dieser Kontaktfläche 7a an die dreidimensionale Kontur eines Werkstückträgers 2 erfolgt durch eine gezielte Kippbewegung des Formungskörpers 7, indem die Tragstruktur 6 mittels einer Drehachse aufeinander zuklappt, bis die Kontaktflächen 7a der Formungskörper 7 an die dreidimensionale Kontur des Werkstückträgers 2 angepasst sind. Zunächst erfassen die Greifeinheiten 5 die Oberseite 1 a einer Fasermatte 1 in einer Aufnahmeposition mittels der Kontaktbereiche 5a der Greifeinheiten 5a (vgl. Fig. 7a). Anschließend erfolgt ein Transport der Fasermatte 1 mittels der Handhabungseinheit 4 zu einer Ablageposition und ein Verlagern der Kontaktflächen 7a des Formungskörpers 7 in Relation zu dem Werkstückträger 2 (vgl. Fig. 7b). Nachfolgend erfolgt ein vollflächiges Anpressen und Lagefixieren der Fasermatte 1 auf dem Werkstückträger mittels der Formungskörper 7 (vgl. Fig. 7c). Das Lösen der gesamten Transportvorrichtung 3 ist nicht mehr näher dargestellt.

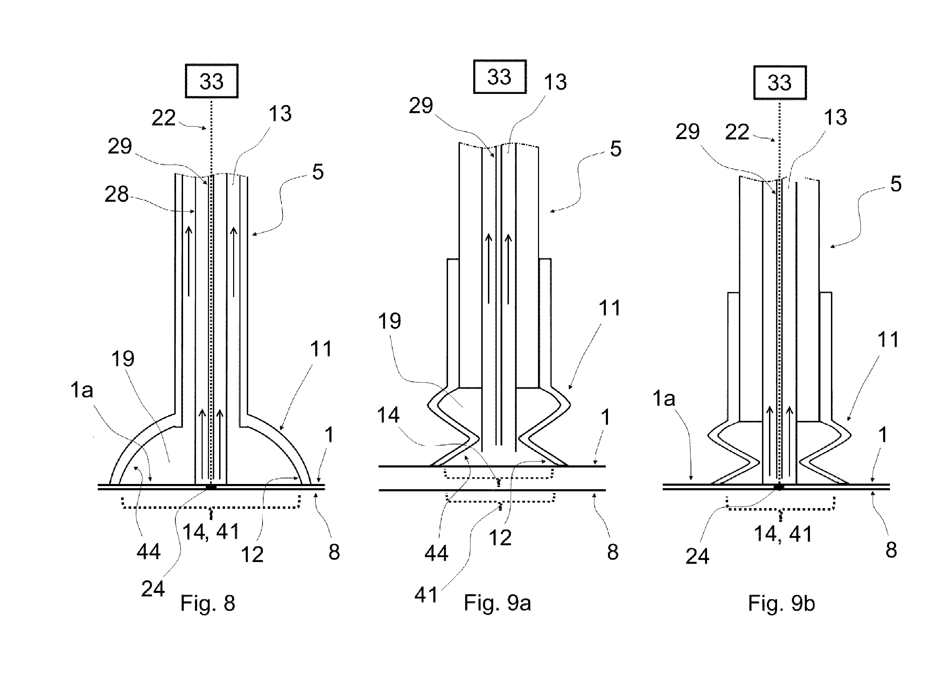

Die Fig. 8 zeigt eine erfindungsgemäße Vorrichtung zum Greifen eines flächigen Halbzeuges 1, insbesondere einer Fasermatte 1. Die Vorrichtung zum Greifen eines flächigen Halbzeuges 1 umfasst eine Greifeinheit 5, wobei die Greifeinheit 5 eine Saugglocke 11 mit einem umlaufenden Rand 12 aufweist. Über eine Druckleitung 13 ist die Saugglocke 11 mittels Anlegen eines Unter- oder eines Überdruckes in einen Ansaugzustand oder einen Abstoßungszustand bringbar. Hierbei schließt der umlaufende Rand 12 im Ansaugzustand einen Teilbereich 14 des flächigen Halbzeuges 1 ein. Ferner ist eine Einrichtung 33 mit einer Quelle einer hochenergetischen Strahlung 22 vorgesehen. Diese Einrichtung 33 ist derart angeordnet, dass die Strahlung 22 innerhalb des umlaufenden Randes 12 auf den Teilbereich 14 des flächigen Halbzeuges 1 übertragbar ist. In dem in Fig. 8 dargestellten Ausführungsbeispiel einer erfindungsgemäßen Vorrichtung zum Greifen eines flächigen Halbzeuges wird die hochenergetische Strahlung 22 durch die Druckleitung 13 übertragen. Innerhalb dieser Druckleitung 13 befindet sich ein Koaxialrohr 28, dessen innere Seele 29 zur Führung der hochenergetischen Strahlung 22 dient. In dem die Seele 29 umgebenden Bereich kann ein Unterdruck erzeugt werden, um insbesondere den bei einem mittels der hochenergetischen Strahlung 22 eingeleiteten Schweißvorgang entstehenden Schweißrauch sofort abzusaugen, damit dieser den Schweißprozess bzw. die hochenergetische Strahlung 22 nicht beeinflusst oder unterbricht.

Die Saugglocke 11 ist steif und unnachgiebig ausgebildet, so dass über die Saugglocke 11 eine Druckkraft auf das flächige Halbzeug 1 übertragbar ist. Der Rand 12 der Saugglocke 11 und der Endbereich des im Saugglockenraum 19 ausmündenden Koaxialrohrs 28 sind so aufeinander abgestimmt, dass diese zugleich auf der Oberseite des flächigen Halbzeuges 1 zum Aufliegen kommen. Hierdurch ist gewährleistet, dass das Koaxialrohr 28 eventuell austretende Streustrahlung der hochenergetischen Strahlung 22 sicher vor dem Austritt in den Saugglockenraum 19 verhindert. Gleichzeitig wird das flächige Halbzeug 1 im Bereich des Auftreffpunkts der hochenergetischen Strahlung 22, also der Fügezone 24, über das Koaxialrohr 28 unmittelbar angepresst, so dass nachteilige Spalte zwischen dem flächigen Halbzeug 1 und einem unterhalb des flächigen Halbzeuges 1 befindlichen Objektes (z. B. ein weiteres flächiges Halbzeug 8) vermieden werden, und somit eine optimale Schweißverbindung zwischen dem flächigen Halbzeug 1 und einem darunter befindlichen Objekt (dem flächigen Halbzeug 8) realisiert werden kann. Im Bereich der Saugglocke 11 ist ein mit der Einrichtung 33 verbundener Drucksensor vorgesehen, dessen Sensorsignal zur Freigabe der hochenergetische Strahlung 22 nutzbar ist. Die dem Teilbereich 14 zugewandte Oberfläche 44 der Saugglocke 11 ist aus einem die hochenergetische Strahlung weitgehend reflektierenden Material gebildet. Hierdurch wird eine unerwünschte Erwärmung der Saugglocke 11 verringert. Mittels des Drucksensors kann das Aufliegen des Endbereiches des Koaxialrohrs 28 detektiert und die hochenergetische Strahlung 22 erst dann freigeben werden, wenn sichergestellt ist, dass ein Aufliegen tatsächlich vorliegt.

Die Einrichtung 33 mit der Quelle der hochenergetischen Strahlung 22 umfasst einen Laserstrahler, kann alternativ auch einen Laserstrahler und/oder einen Plasmastrahler und/oder einen Elektronenstrahler umfassen. Die hochenergetische Strahlung 22 kann daher ein Laserstrahl und/oder ein Elektronenstrahl und/oder ein Plasmastrahl sein.

In den Figuren 9a und 9b ist eine weitere Ausführungsform einer erfindungsgemäßen Vorrichtung zum Greifen eines flächigen Halbzeuges dargestellt, mit einer Greifeinheit 5, welche eine Saugglocke 11 mit einem umlaufenden Rand 12 aufweist, welche über eine Druckleitung 13 mittels Anlegen eines Unter- oder eines Überdruckes in einen Ansaugzustand oder einen Abstoßungszustand bringbar ist und wobei der umlaufende Rand 12 im Ansaugzustand einen Teilbereich 14 des flächigen Halbzeuges einschließt. Es ist ebenfalls eine Einrichtung 33 mit einer Quelle einer hochenergetischen Strahlung 22 vorgesehen, wobei diese Einrichtung 33 derart angeordnet ist, dass die Strahlung 22 innerhalb des umlaufenden Randes 12 auf den Teilbereich 14 des flächigen Halbzeuges 1 übertragbar ist. Die hochenergetische Strahlung 22 wird über eine Druckleitung 13 und eine innerhalb der Druckleitung 13 angeordnete Seele 29 geführt bzw. übertragen. Die Saugglocke 11 ist als elastisch nachgiebige Balgsaugglocke ausgebildet und, wie in Fig. 9b dargestellt, bei Kontakt des abzulegenden flächigen Halbzeuges 1 mit z. B. einem weiteren ortsfesten flächigen Halbzeug 8 soweit nachgiebig, dass die Druckleitung 13 mit ihrem Endbereich (Austrittsende) auf der Oberseite 1a des flächigen Halbzeuges 1 aufliegt und im Bereich des Auftreffpunktes der hochenergetischen Strahlung 22, also der Fügezone 24, das flächige Halbzeug 1 und das darunter befindliche weitere flächige Halbzeug 8 aufeinander presst. Entsprechend werden nachteilige Spalte zwischen den beiden Halbzeugen 1 und 8 verringert und die Qualität der Schweißverbindung erhöht. Im Bereich der Saugglocke 11 ist ein mit der Einrichtung 33 verbundener Drucksensor vorgesehen, dessen Sensorsignal zur Freigabe der hochenergetische Strahlung 22 nutzbar ist. Die dem Teilbereich 14 zugewandte Oberfläche 44 der Saugglocke 11 ist mit einem die hochenergetische Strahlung weitgehend reflektierenden Material beschichtet. Hierdurch wird eine unerwünschte Erwärmung der Saugglocke 11 verringert. Mittels des Drucksensors kann das Aufliegen des Endbereiches der Druckleitung 13 detektiert und die hochenergetische Strahlung 22 erst dann freigegeben wenn, wenn sichergestellt ist, dass ein Aufliegen tatsächlich vorliegt.

Die Einrichtung 33 mit der Quelle der hochenergetischen Strahlung 22 umfasst einen Laserstrahler, kann alternativ auch einen Laserstrahler und/oder einen Plasmastrahler und/oder einen Elektronenstrahler umfassen. Die hochenergetische Strahlung 22 kann daher ein Laserstrahl und/oder ein Elektronenstrahl und/oder ein Plasmastrahl sein.

## Patentansprüche

1. Transportverfahren zur Ablage von Fasermatten (1) auf einen Werkstückträger (2) unter Verwendung einer Transportvorrichtung (3), wobei die Transportvorrichtung (3) aufweist:
- eine räumlich bewegbaren Handhabungseinheit (4),
- mindestens eine Greifeinheit (5) mit einem Kontaktbereich (5a) zum Erfassen der Oberseite (1a) der Fasermatte (1),
- mindestens eine die Handhabungseinheit (4) und die Greifeinheit (5) verbindende Tragstruktur (6),
- mindestens einen an der Tragstruktur (6) angeordneten und mit der Fasermatte (1) in Kontakt bringbaren, eine Kontaktfläche (7a) aufweisenden Formungskörper (7), wobei die Kontaktfläche (7a) an die vorzugsweise dreidimensionale Kontur des Werkstückträgers (2) angepasst oder anpassbar ist,
umfassend die folgenden Schritte:
- Oberseitiges Erfassen einer bereitgestellten Fasermatte (1) in einer Aufnahmeposition mittels des Kontaktbereiches (5a) der Greifeinheit (5),
- Transport der Fasermatte (1) mittels der Handhabungseinheit (4) zu einer Ablageposition,
- Annähern der Unterseite (1 b) der Fasermatte (1) an den Werkstückträger (2),
- Verlagern der Kontaktfläche (7a) des Formungskörpers (7) in Relation zu dem Werkstückträger (2),
- vorzugsweise vollflächiges Anpressen und/oder Lagefixieren der Fasermatte (1) auf den/dem Werkstückträger (2) oder eine auf dem Werkstückträger (2) befindliche weitere Fasermatte (8) mittels des Formungskörpers (7),
- Lösen der gesamten Transportvorrichtung (3) von der Fasermatte (1).

2. Transportverfahren nach Anspruch 1, **dadurch gekennzeichnet, dass** die Verlagerung der Kontaktfläche (7a) des Formungskörpers (7) durch eine auf die Kontaktfläche (7a) einwirkende Druckkraft erfolgt.

3. Transportverfahren nach Anspruch 1, **dadurch gekennzeichnet, dass** die Verlagerung der Kontaktfläche (7a) des Formungskörpers (7) durch eine gezielte Kippbewegung und/oder Hubbewegung des Formungskörpers (7) oder von Teilen des Formungskörpers (7) erfolgt.

4. Transportverfahren nach einem der vorstehenden Ansprüche, **dadurch gekennzeichnet, dass** das Lösen über ein Anblasen der Oberseite (1 a) der Fasermatte (1) mit Druckluft über an der Transportvorrichtung (3) vorgesehene Druckluftausströmer (10) unterstützt wird.

5. Transportverfahren nach einem der vorstehenden Ansprüche, **dadurch gekennzeichnet, dass** der Formungskörper (7) durch mindestens eine zusätzliche Greifeinheit (55) gebildet wird, wobei der Kontaktbereich (55a) der zusätzlichen Greifeinheit (55) die Kontaktfläche (7a) definiert und mittels mindestens einer Kippachse (40) an die dreidimensionale Kontur des Werkstückträgers (2) anpassbar ist.

6. Transportverfahren nach einem der vorstehenden Ansprüche, **dadurch gekennzeichnet, dass** der Formungskörper (7) durch eine Mehrzahl von stabförmigen, in Längsrichtung beweglich gelagerten Segmentformungskörpern (77) gebildet ist, deren Endbereiche gemeinsam die Kontaktfläche (7a) definieren.

7. Transportverfahren nach Anspruch 6, **dadurch gekennzeichnet, dass** zumindest einige der Segmentformungskörper (77) einen zur Kontaktfläche (7a) offenen Hohlraum aufweisen.

8. Transportverfahren nach einem der vorstehenden Ansprüche, **dadurch gekennzeichnet, dass** die Fasermatte (1) mit der weiteren Fasermatte (8) lokal verbunden, insbesondere verschweißt wird.

9. Transportverfahren nach einem der vorstehenden Ansprüche, **dadurch gekennzeichnet, dass** die Kontaktfläche (7a) des Formungskörper (7) und/oder der Kontaktbereich (5a) der Greifeinheit (5) in Ultraschallschwingungen versetzbar ist/sind.

10. Transportverfahren nach einem der vorstehenden Ansprüche, **dadurch gekennzeichnet, dass** über oder durch die Greifeinheit (5) und/oder den Formungskörper (7) eine hochenergetische Strahlung (22) auf die Fasermatte (1) und/oder die weitere Fasermatte (8) übertragbar ist.

11. Transportverfahren nach einem der vorstehenden Ansprüche, **dadurch gekennzeichnet, dass** die Kontaktfläche (7a) des Formungskörper (7) und/oder der Kontaktbereiche (5a) der Greifeinheit (5) mit einer Schicht (26) aus einem Haftungsvermindernden Material versehen oder überhautet ist/sind.

12. Transportvorrichtung (3) zum Transport von Fasermatten, insbesondere zur Verwendung in einem Transportverfahren nach einem der Ansprüche 1 bis 11, mit:
- einer räumlich bewegbaren Handhabungseinheit (4),
- mindestens einer Greifeinheit (5) zum Erfassen der Oberseite (1 a) einer Fasermatte (1), wobei die Greifeinheit (5) an ihrem Ende einen Kontaktbereich (5a) zum Erfassen der Fasermatte (1) aufweist,
- mindestens einer Tragstruktur (6) mittels der die Handhabungseinheit (4) mit der Greifeinheit (5) verbunden ist,
**dadurch gekennzeichnet, dass**
die Transportvorrichtung (3) ferner mindestens einen mit der Fasermatte (1) in Kontakt bringbaren, eine Kontaktfläche (7a) aufweisenden Formungskörper (7) umfasst, welcher an der Tragstruktur (6) angeordnet ist, und dessen Kontaktfläche (7a) an die dreidimensionale Kontur des Werkstückträgers (2) angepasst oder anpassbar ist, und die Kontaktfläche (7a) des Formungskörpers (7) in Relation zu dem Werkstückträger (2) verlagerbar ist, so dass über den Formungskörper (7) die Fasermatte (1) auf dem Werkstückträger (2) und/oder eine auf dem Werkstückträger (2) befindliche weitere Fasermatte (8) vorzugsweise vollflächig anpressbar und/oder dort lagefixierbar ist.

13. Vorrichtung zum Greifen eines flächigen Halbzeuges, vorzugsweise einer Fasermatte (1), insbesondere zur Verwendung in einem Transportverfahren nach einem der Ansprüche 1 bis 11 oder in einer Transportvorrichtung gemäß Anspruch 12, mit einer Greifeinheit (5), wobei die Greifeinheit (5) eine Saugglocke (11) mit einem umlaufenden Rand (12) aufweist, welche über mindestens eine Druckleitung (13) mittels Anlegen eines Unter- oder eines Überdrucks in einen Ansaugzustand oder einen Abstoßungszustand bringbar ist und, wobei der umlaufende Rand (12) im Ansaugzustand einen Teilbereich (14) des flächigen Halbzeuges (1) einschließt,
**dadurch gekennzeichnet, dass**
mindestens eine Einrichtung (33) mit einer Quelle einer hochenergetischen Strahlung (22) vorgesehen ist, wobei diese Einrichtung (33) derart angeordnet ist, dass die Strahlung (22) innerhalb des umlaufenden Randes (12) auf den Teilbereich (14) des flächigen Halbzeuges (1) übertragbar ist.

14. Vorrichtung nach Anspruch 13, **dadurch gekennzeichnet, dass** die hochenergetische Strahlung (22) über oder durch die Druckleitung (13) übertragbar ist.

15. Vorrichtung nach einem der Ansprüche 13 oder 14, **dadurch gekennzeichnet, dass** die Einrichtung (33) mit der Quelle der hochenergetischen Strahlung (22) einen Laserstrahler und/oder einen Plasmastrahler und/oder einen Elektronenstrahler umfasst.
